# EUROPEAN PATENT SPECIFICATION

(11) **EP 4 491 453 B1**
(45) Date of publication and mention of the grant of the patent: **27.05.2026**
(21) Application number: 23766022.0
(22) Date of filing: 07.03.2023
(51) Int. Cl.: F25D 17/06, B60R 7/04

(54) **ONBOARD REFRIGERATOR AND AUTOMOBILE**
BORDKÜHLSCHRANK UND FAHRZEUG
RÉFRIGÉRATEUR EMBARQUÉ ET AUTOMOBILE

(30) Priority: 09.03.2022 CN 202220505946 U; 18.03.2022 CN 202220608724 U
(43) Date of publication of application: 15.01.2025
(73) Proprietor: Beijing Chehejia Automobile Technology Co., Ltd., Beijing 101300 (CN)
(72) Inventor: ZHANG, Ziwen, Beijing 101300 (CN); QIU, Peng, Beijing 101300 (CN); LIN, Meisui, Beijing 101300 (CN)
(74) Representative: Michalski Hüttermann & Partner Patentanwälte mbB
(86) International application number: PCT/CN2023/080172
(87) International publication number: WO 2023/169444

(56) References cited:
- EP-A1- 3 789 246
- CN-U- 204 519 879
- CN-U- 205 381 508
- CN-U- 209 197 288
- CN-U- 212 566 475
- CN-U- 217 672 315
- CN-Y- 2 254 166
- DE-A1- 102007 043 213
- DE-U1- 20 215 882
- FR-A1- 3 042 454
- JP-A- 2003 279 243

## Description

### TECHNICAL FIELD

The present disclosure relates to the technical field of refrigerating devices, and particularly to an onboard refrigerator and a vehicle.

### BACKGROUND

Onboard refrigerators, as one of the most commonly used home appliance products, serve for the routine work to preserve freshness of food for the users. In the related art, the sliding structure for connecting the drawer and the cabinet inside the onboard refrigerators occupies a large room inside the refrigerator, which restricts the capacity for the articles of the onboard refrigerators, and therefore the volume is low. Furthermore, the door plate of the onboard refrigerators is of a flip structure, and when the user requires taking or placing the articles inside the storage room, he is required to stretch his hand into the storage room. Related technologies are known from a patent publication document DE20215882U1, DE102007043213A1, CN2254166Y, and EP3789246A1.

### SUMMARY

The invention is defined in the independent claims. The embodiments of the present disclosure provide an onboard refrigerator that facilitates the user to take or place articles, has a reasonable structural design, and has a large volume.

The embodiments of the present disclosure further provide a vehicle.

The onboard refrigerator according to the invention includes:
a cabinet;
a drawer, wherein the drawer is slidably provided inside the cabinet; and
a sliding component, wherein the sliding component includes a first sliding member and a second sliding member, the first sliding member is provided on the drawer, the second sliding member is provided at an inner wall surface of the cabinet, the second sliding member has a sliding surface that is sliding-fitted to the first sliding member, and the sliding surface of the second sliding member and a plane orthogonal to a height direction of the cabinet have an included angle therebetween in a first direction, wherein the first direction is orthogonal to the height direction and a front-rear direction of the cabinet.

The sliding surface of the second sliding member of the onboard refrigerator according to the embodiments of the present disclosure has a certain included angle with the plane orthogonal to the height direction of the cabinet, which reduces the room inside the cabinet that is occupied by the structure formed by the cooperation between the first sliding member and the second sliding member, and therefore the drawer can have a larger room for storing more articles. In addition, by providing the movable drawer inside the cabinet, that can facilitate the user to take out the articles inside the cabinet and place the articles into the cabinet with convenient operations.

According to the invention, the sliding component further includes a fixing base, the fixing base is provided inside the cabinet, the second sliding member is provided on the fixing base, the fixing base has an oblique surface, the oblique surface forms the included angle with the plane, the second sliding member is provided on the oblique surface, and the sliding surface of the second sliding member is parallel to the oblique surface.

In some embodiments, a quantity of the first sliding member is at least two, a quantity of the second sliding member is at least two, each of the first sliding members corresponds to one instance of the second sliding members, the oblique surface is a plurality of oblique surfaces, and each of the second sliding members corresponds to one instance of the plurality of oblique surfaces.

In some embodiments, the fixing base includes a first side surface and a second side surface that are provided opposite to each other in the first direction, the oblique surface includes the first side surface and the second side surface, the first side surface extends in a direction from bottom to top and inclines toward the second side surface, the second side surface extends in the direction from bottom to top and inclines toward the first side surface, one instance of the second sliding members corresponds to the first side surface, and another instance of the second sliding members corresponds to the second side surface.

In some embodiments, the included angle is greater than or equal to 30 degrees and less than or equal to 60 degrees.

In some embodiments, the second sliding member is detachably connected to the oblique surface.

In some embodiments, a first stopper is provided at a front end of the fixing base, a first fitting part is provided at a rear end of the drawer, and the first stopper is capable of fitting to the first fitting part to restrict a maximum opening degree of the drawer.

In some embodiments, a second stopper is provided at the front end of the fixing base, the second stopper includes an elastic member that is telescopic in the height direction of the cabinet, a second fitting part is provided at a bottom of the drawer, the second fitting part is located between a front end and the rear end of the drawer, and the second stopper is capable of fitting to the second fitting part to position the drawer.

In some embodiments, a quantity of the second stopper is at least two, and the first stopper is provided between neighboring instances of the second stoppers.

In some embodiments, the first stopper and the second stopper face each other and are separate in the first direction.

In some embodiments, a rack is provided on one of the drawer and the fixing base, a damping gear is provided on the other of the drawer and the fixing base, and the damping gear and the rack are fitted.

In some embodiments, the onboard refrigerator further includes an installation frame, the installation frame is provided at a bottom wall of the drawer, the damping gear is provided on the installation frame, and the rack is provided on the fixing base and extends in a length direction of the second sliding member.

The vehicle according to another embodiment of the present disclosure includes: a vehicle body; and an onboard refrigerator, wherein the onboard refrigerator is provided inside the vehicle body, and the onboard refrigerator is the onboard refrigerator according to any one of the above embodiments.

In the vehicle according to the embodiments of the present disclosure, the sliding surface of the second sliding member of the onboard refrigerator has a certain included angle with the plane orthogonal to the height direction of the cabinet, which reduces the room inside the cabinet that is occupied by the structure formed by the cooperation between the first sliding member and the second sliding member, and therefore the drawer can have a larger room for storing more articles. In addition, by providing the movable drawer inside the cabinet, that can facilitate the user to take out the articles inside the cabinet and place the articles into the cabinet with convenient operations.

### BRIEF DESCRIPTION OF THE DRAWINGS

FIG. 1 is a schematic diagram when the drawer of an onboard refrigerator according to an embodiment of the present disclosure has been drawn out.
FIG. 2 is a schematic structural diagram of a drawer according to an embodiment of the present disclosure.
FIG. 3 is a schematic diagram of cooperation of a door plate, a drawer and a sliding component of an onboard refrigerator according to an embodiment of the present disclosure.
FIG. 4 is a schematic diagram of cooperation between a first sliding member and a second sliding member of an onboard refrigerator according to an embodiment of the present disclosure.
FIG. 5 is an enlarged view of A in FIG. 4.
FIG. 6 is a schematic diagram of a fixing base of an onboard refrigerator according to an embodiment of the present disclosure.
FIG. 7 is a partially bottom view of a drawer of an onboard refrigerator according to an embodiment of the present disclosure.
FIG. 8 is a schematic structural diagram of a drawer and a fixing base of an onboard refrigerator according to an embodiment of the present disclosure.

### Reference numbers:

1: cabinet;
2: drawer; 21: first fitting part; 22: second fitting part;
3: sliding component; 31: first sliding member; 32: second sliding member; 321: second installation sites; 33: fixing base; 331: first installation sites; 332: rack; 333: first stopper; 334: second stopper; 335: elastic piece; 336: first side surface; 337: second side surface; 34: connectors;
51: installation frame; 52: damping gear;
6: door plate;
7: housing; 71: first frame body; and 72: second frame body.

### DETAILED DESCRIPTION

The embodiments of the present disclosure will be described in detail below, and the examples of the embodiments are illustrated in the drawings. The embodiments described below with reference to the drawings are exemplary, are intended to interpret the present disclosure, and should not be construed as a limitation on the present disclosure.

In related art, the door plate of the onboard refrigerators is of a flip structure, and when the user requires taking or placing the articles inside the storage room, he is required to stretch his hand into the storage room. However, because the onboard refrigerator has a small size, and the articles are blocked by the cabinet, the user, when taking or placing the articles, has a poor visibility, and the operation is inconvenient.

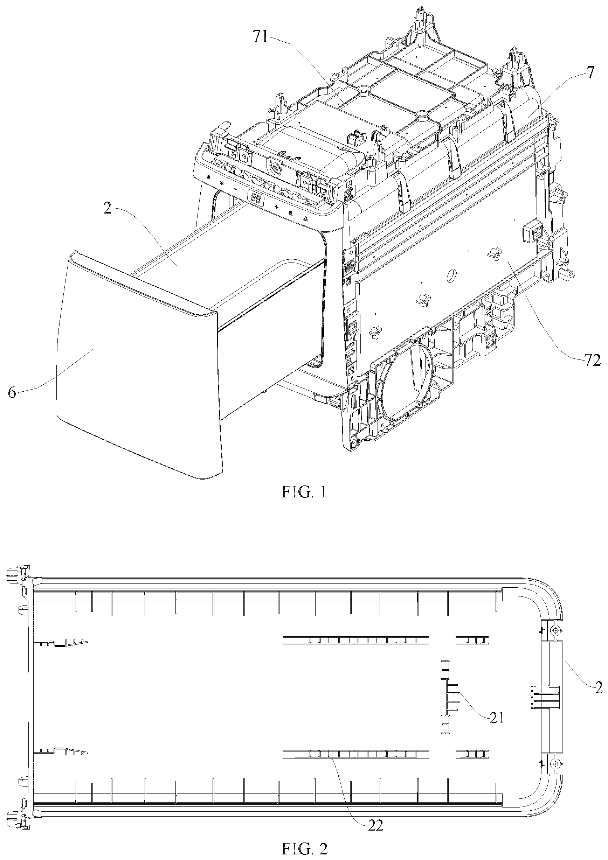

The onboard refrigerator and the vehicle according to the embodiments of the present disclosure will be described below with reference to FIG. 1 to FIG. 8.

As shown in FIG. 1 to FIG. 8, the onboard refrigerator according to an embodiment of the present disclosure includes a cabinet 1, a drawer 2 and a sliding component 3. The drawer 2 is slidably provided inside the cabinet 1. The sliding component 3 includes a first sliding member 31 and a second sliding member 32, the first sliding member 31 is provided on the drawer 2, the second sliding member 32 is provided at the inner wall surface of the cabinet 1, the second sliding member 31 has a sliding surface that is sliding-fitted to the first sliding member 31, and the sliding surface of the second sliding member 32 and a plane orthogonal to the height direction of the cabinet 1 have an included angle therebetween.

In other words, the first sliding member 31 and the second sliding member 32 are slidably connected, so that the drawer 2 is movable between an opening position and a closing position. When the drawer 2 is in the opening position, at least part of the drawer 2 is located outside the cabinet 1, whereby the user takes or places the articles inside the drawer 2. When the drawer 2 is in the closing position, the drawer 2 is located inside the cabinet 1.

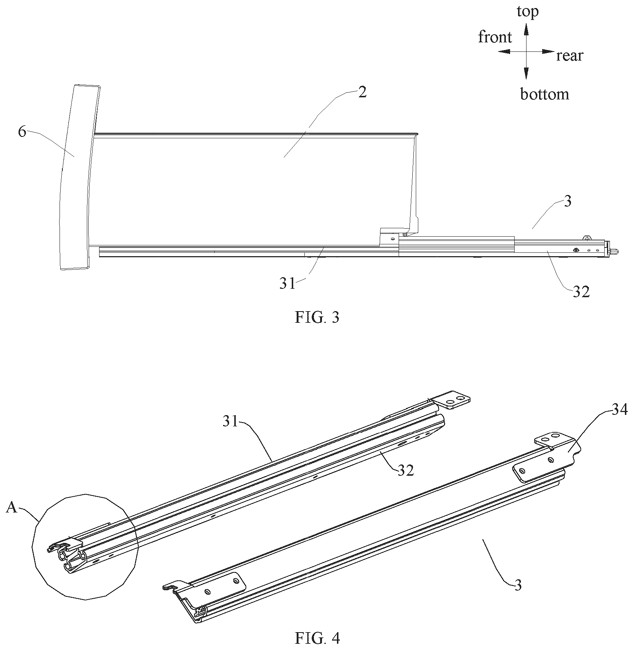

It can be understood that the first sliding member 31 and the drawer 2 are fixed to each other, the second sliding member 32 and the cabinet 1 are fixed to each other, and the first sliding member 31 is slidable in the length direction (for example, the front-rear direction in FIG. 3) of the second sliding member 32, whereby at least part of the drawer 2 can be drawn out of the cabinet 1 in the opening position, and the drawer 2 can be pushed into the cabinet 1 in the closing position.

In some embodiments, the included angle formed between the sliding surface of the second sliding member 32 and the plane orthogonal to the height direction of the cabinet 1 is greater than 0° and less than 90°.

In some other embodiments, the included angle formed between the sliding surface of the second sliding member 32 and the plane orthogonal to the height direction of the cabinet 1 is greater than 90° and less than 180°.

The sliding surface of the second sliding member 32 of the onboard refrigerator according to the embodiments of the present disclosure has a certain included angle with the plane orthogonal to the height direction of the cabinet 1; in other words, the sliding surface of the second sliding member 32 inclines. That can enable the second sliding member 32 to have a reduced dimension in the height direction of the cabinet 1, and accordingly reduces the dimension in the height direction of the cabinet 1 of the structure formed by the cooperation between the first sliding member 31 on the drawer 2 and the second sliding member 32, i.e., reducing the room inside the cabinet 1 that is occupied by the structure formed by the cooperation between the first sliding member 31 and the second sliding member 32. In an aspect, when the volume of the cabinet 1 is fixed, the volume of the drawer 2 can be increased, so as to store more articles. In another aspect, when the volume of the drawer 2 is fixed, the size of the outer contour of the cabinet 1 can be reduced, to reduce the room occupied by the onboard refrigerator.

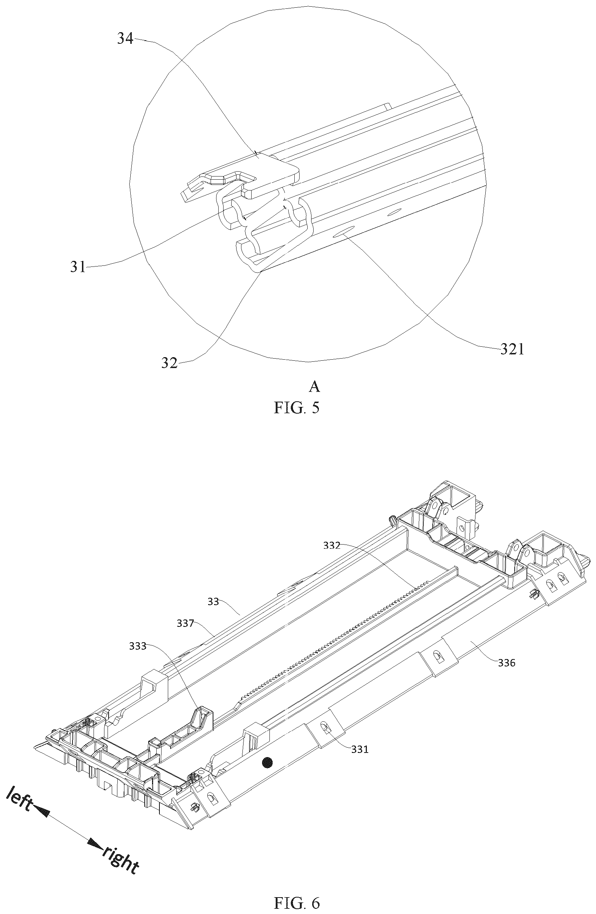

In addition, by providing the movable drawer 2 inside the cabinet 1, that can facilitate the user to take out the articles inside the cabinet 1 and place the articles into the cabinet 1 with convenient operations. Furthermore, because the first sliding member 31 is provided on the drawer 2, the second sliding member 32 is provided inside the cabinet 1, and the first sliding member 31 and the second sliding member 32 are slidably connected, the drawer 2, when drawn, can have a good stability, and does not easily shake, to have a good effect of usage. According to the invention, as shown in FIG. 6, the sliding component 3 further includes a fixing base 33, the sliding component 3 further includes a fixing base 33, the fixing base 33 is provided inside the cabinet 1, and the second sliding member 32 is provided on the fixing base 33.

For example, as shown in FIG. 6, the inner wall surface of the cabinet 1 includes a bottom wall, the fixing base 33 is provided on the bottom wall, and the second sliding member 32 is provided on the fixing base 33. It can be understood that the fixing base 33 and a storage room 11 are fixed to each other, and the fixing base 33 is provided at the bottom of the storage room 11, which can enable the drawer 2 to have a better stability when drawn.

The fixing base 33 has an oblique surface, the oblique surface forms the included angle with the plane, the second sliding member 32 is provided on the oblique surface, and the sliding surface of the second sliding member 32 is parallel to the oblique surface. The plane refers to the plane orthogonal to the height direction of the cabinet 1.

It can be understood that the oblique surface of the fixing base 33 can enable the second sliding member 32 provided thereon to incline; in other words, it can enable the sliding surface of the second sliding member 32 and the plane orthogonal to the height direction of the cabinet 1 to form an included angle therebetween, thereby, by utilizing the structure of the fixing base 33, enabling the sliding surface and the plane orthogonal to the height direction of the cabinet 1 to form the included angle therebetween, which improves the structural integrality of the onboard refrigerator.

In some embodiments, the quantity of the first sliding member 31 is at least two, the quantity of the second sliding member 32 is at least two, each of the first sliding members 31 corresponds to one second sliding member 32, the oblique surface is a plurality of oblique surfaces, and each of the second sliding members 32 corresponds to one oblique surface.

For example, as shown in FIG. 4, there are two first sliding members 31 and two second sliding members 32, wherein one of the two first sliding members 31 cooperates with one of the two second sliding members 32, and the other of the two first sliding members 31 cooperates with the other of the two second sliding members 32. It can be understood that, by connecting the drawer 2 and the cabinet 1 by using the plurality of first sliding members 31 and second sliding members 32, that does not only enable the connection between the drawer 2 and the cabinet 1 to be more stable, but also improves the stability of the drawer 2 in the sliding state.

In some embodiments, as shown in FIG. 4 and FIG. 5, the sliding component 3 further includes connectors 34, the connectors 34 are at least two connectors, the two connectors 34 are provided at the two ends of the first sliding member 31, and the connectors 34 are detachably connected to the first sliding member 31 and the drawer 2. For example, each of the connectors 34 may be a metal-plate member, one end of the connector 34 is connected to the first sliding member 31 by a thread member, and the other end of the connector 34 is connected to the drawer 2 by a thread member, whereby the connection between the second sliding member 32 and the drawer 2 can have a simple structure, a high connection strength and a long service life.

In some embodiments, as shown in FIG. 6, the fixing base 33 includes a first side surface 336 and a second side surface 337 that are provided opposite to each other in the first direction (for example, the left-right direction shown in FIG. 3), the oblique surface includes the first side surface 336 and the second side surface 337, the first side surface 336 extends in the direction from bottom to top and inclines toward the second side surface 337, the second side surface 337 extends in the direction from bottom to top and inclines toward the first side surface 336, one second sliding member 32 corresponds to the first side surface 336, and another second sliding member 32 corresponds to the second side surface 337.

In other words, the spacing distance between the upper end of the first side surface 336 and the upper end of the second side surface 337 is greater than the spacing distance between the lower end of the first side surface 336 and the lower end of the second side surface 337.

In some embodiments, the first side surface 336 extends in the direction from bottom to top and inclines away from the second side surface 337, the second side surface 337 extends in the direction from bottom to top and inclines away from the first side surface 336, one second sliding member 32 corresponds to the first side surface 336, and another second sliding member 32 corresponds to the second side surface 337.

In other words, the spacing distance between the lower end of the first side surface 336 and the lower end of the second side surface 337 is greater than the spacing distance between the upper end of the first side surface 336 and the upper end of the second side surface 337.

It can be understood that both of the first side surface 336 and the second side surface 337 incline, to cause the second sliding member 32 provided on the first side surface 336 and the second side surface 337 to incline, and accordingly reduces the dimension in the height direction of the cabinet 1 of the structure formed by the cooperation between the first sliding member 31 on the drawer 2 and the second sliding member 32. In an aspect, when the volume of the cabinet 1 is unchanged, the volume of the drawer 2 can be increased, so as to store more articles. In another aspect, when the volume of the drawer 2 is unchanged, the size of the outer contour of the cabinet 1 can be reduced, to reduce the room occupied by the onboard refrigerator. Optionally, the included angle formed between the sliding surface of the second sliding member 32 and the plane orthogonal to the height direction of the cabinet 1 is greater than or equal to 30 degrees and less than or equal to 60 degrees.

It can be understood that, when the included angle is greater than or equal to 30 degrees and less than or equal to 60 degrees, in an aspect, that can reduce the dimension in the height direction of the cabinet 1 of the structure formed by the cooperation between the first sliding member 31 and the second sliding member 32, thereby reducing the volume that is occupied by the structure formed by the cooperation between the first sliding member 31 and the second sliding member 32. In another aspect, the large included angle can prevent damaging the second sliding member 32 by an excessively large gravity of the drawer 2.

In some embodiments, as shown in FIG. 6, the fixing base 33 and the bottom wall are detachably connected. For example, the fixing base 33 may be connected to the bottom wall by a thread member, a snap-fitting structure and so on, which facilitates the processing and the manufacturing of the onboard refrigerator and facilitate the assembling.

In some embodiments, as shown in FIG. 4 to FIG. 6, the fixing base 33 and the second sliding member 32 are detachably connected. For example, the fixing base 33 is provided with a plurality of first installation sites 331 that are separate in the length direction of the fixing base 33, the second sliding member 32 is provided with a plurality of second installation sites 331 that are separate in the length direction of the second sliding member 32, the plurality of first installation sites 331 and the plurality of first installation sites 331 correspond one to one, the sliding component 3 further includes thread members, and the thread members are connected to the first installation sites 331 and the second installation sites 331. It can be understood that the fixing base 33 and the second sliding member 32 are fixed by using the plurality of thread members, which can improve the stability of the connection between the fixing base 33 and the second sliding member 32, and has a simple structure and a convenient assembling.

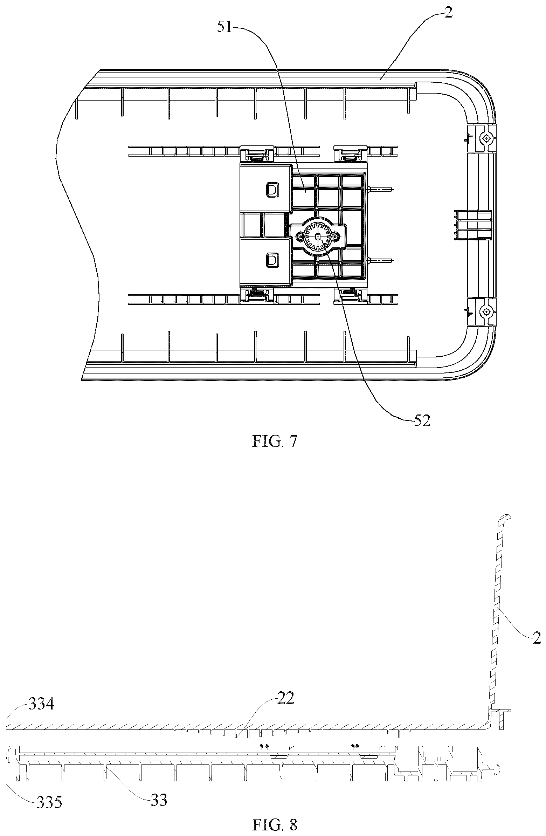

In some embodiments, as shown in FIG. 2 and FIG. 8, a first stopper 333 is provided at the front end of the fixing base 33, a first fitting part 21 is provided at the rear end of the drawer 2, and the first stopper 333 is capable of fitting to the first fitting part 21 to restrict the maximum opening degree of the drawer 2. In other words, when the drawer 2 is in the position of the maximum opening degree, the first stopper 333 may cooperate with the first fitting part 21, to cause the drawer 2 to be unable to continue to move out of the cabinet 1, to ensure that the drawer 2 does not fall out of the cabinet 1. That can prevent, in harsh operation conditions, for example, when the vehicle is travelling in a road having poor road conditions, intensive vibration of the vehicle and falling of the drawer 2 out of the cabinet 1, which improves the usage experience of the user.

In some embodiments, as shown in FIG. 2 and FIG. 8, a second stopper 334 is provided at the front end of the fixing base 33, the second stopper 334 includes an elastic member 335 that is telescopic in the height direction of the cabinet 1, a second fitting part 22 is provided at the bottom of the drawer 2, the second fitting part 22 is located between the front end and the rear end of the drawer 2, and the second stopper 334 is capable of fitting to the second fitting part 22 to position the drawer 2.

For example, as shown in FIG. 8, one end of the second stopper 334 is pivotably connected to the fixing base 33, the other end of the second stopper 334 is connected to or contacts one end of the elastic member 335, and the other end of the elastic member 335 is connected to or contacts the fixing base 33.

When the drawer 2 has been pulled out by a certain distance, the end of the second stopper 334 that is connected to or contacts the elastic member 335 may abut the second fitting part 22, which restricts the movement of the drawer 2, to cause the second stopper 334 to serve to position the drawer 2. Continuing to pull the drawer 2 causes the second stopper 334 to bear a larger force of the second fitting part 22, and the second fitting part 22 presses the second stopper 334 downwardly, which reduces the height of the end of the second stopper 334 that serves for limiting, whereby the second stopper 334 cannot limit the second fitting part 22, to enable the drawer 2 to continue to move out of the cabinet 1. It can be understood that the degree with which the drawer 2 can be drawn out is controlled by using the cooperation between the second stopper 334 and the second fitting part 22, which improves the usage experience of the user.

In some embodiments, as shown in FIG. 6 and FIG. 7, a rack 332 is provided on one of the drawer 2 and the fixing base 33, a damping gear 52 is provided on the other of the drawer 2 and the fixing base 33, and the damping gear 52 and the rack 332 are fitted. For example, the rack 332 is provided on the fixing base 33, and the rack 332 is located in the middle position of the fixing base 33 and extends in a length direction of the second sliding member 32 (for example, the front-rear direction in FIG. 3). The damping gear 52 is provided on the drawer 2. In the onboard refrigerator according to the embodiments of the present disclosure, by providing the rack 332 and the damping gear 52, the drawer 2 can have a damping sense when drawn, whereby the drawer 2, when drawn, has a good effect, thereby improving the usage experience of the user.

In some embodiments, as shown in FIG. 7, the onboard refrigerator further includes an installation frame 51, the installation frame 51 is provided at the bottom wall of the drawer 2, and the damping gear is provided on the installation frame 51. For example, the installation frame 51 is snap-fitted to the bottom of the drawer 2, which can prevent perforating the drawer 2, and facilitates the installation. The installation frame 51 may be connected to the damping gear 52 by a thread member, and the damping gear 52 is rotatable relative to the installation frame 51. In the onboard refrigerator according to the embodiments of the present disclosure, by the above configuration, the operator can replace the component parts such as the damping gear 52, to have a good effect of usage.

In some embodiments, as shown in FIG. 5, one of the first sliding member 31 and the second sliding member 32 is provided with a sliding rail, the other is provided with a guide groove, and the sliding rail is sliding-fitted inside the guide groove. For example, the first sliding member 31 is provided with the sliding rail, the second sliding member 32 is provided with the guide groove, and the lower end of the sliding rail is embedded into the guide groove, and is slidable in the length direction of the guide groove. That can prevent derailment between the first sliding member 31 and the second sliding member 32, to enable the drawer 2 to have a high reliability in usage.

In some embodiments, as shown in FIG. 1 and FIG. 2, the onboard refrigerator further includes a door plate 6, the door plate 6 is connected to the drawer 2, and, in the closing position, the door plate 6 closes the cabinet 1. In some embodiments, the drawer 2 and the door plate 6 are detachably connected. For example, the drawer 2 is connected to the door plate 6 by a thread member or a snap-fitting structure, which facilitates the processing and manufacturing and simplifies the assembling. Alternatively, the drawer 2 and the door plate 6 are integrally formed, which can increase the structural strength and prolong the service life.

In some embodiments, as shown in FIG. 1, the refrigerator further includes a housing 7, an installation cavity is provided inside the housing 7, and the cabinet 1 is provided inside the installation cavity. The housing 7 may be an injection-molded member, which can reduce the weight of the refrigerator, and can ensure the structural strength of the refrigerator. For example, the housing 7 includes a first frame body 71 and a second frame body 72, and the first frame body 71 is provided at the upper end of the second frame body 72 to enclose the installation cavity. Both of the first frame body 71 and the second frame body 72 are an injection-molded member, and the first frame body 71 and the second frame body 72 are connected by a thread member. In the refrigerator according to the embodiments of the present disclosure, by configuring the housing 7 to be the first frame body 71 and the second frame body 72, the quantity of the component parts for assembling the housing 7 can be reduced, and the light-weighting design enables the refrigerator to have a low weight.

The vehicle according to another embodiment of the present disclosure includes a vehicle body and an onboard refrigerator, wherein the onboard refrigerator is provided inside the vehicle body, and the onboard refrigerator is the onboard refrigerator according to the embodiments of the present disclosure.

In the vehicle according to the embodiments of the present disclosure, the sliding surface of the second sliding member 32 of the onboard refrigerator has a certain included angle with the plane orthogonal to the height direction of the cabinet 1, which reduces the room inside the cabinet 1 that is occupied by the structure formed by the cooperation between the first sliding member 31 and the second sliding member 32, and therefore the drawer 2 can have a larger room for storing more articles. In addition, by providing the movable drawer 2 inside the cabinet 1, that can facilitate the user to take out the articles inside the cabinet 1 and place the articles into the cabinet 1 with convenient operations.

In the description of the present disclosure, it should be understood that the terms that indicate orientation or position relations, such as "central", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial" and "circumferential", are based on the orientation or position relations shown in the drawings, and are merely for conveniently describing the present disclosure and simplifying the description, rather than indicating or implying that the device or element must have the specific orientation and be constructed and operated according to the specific orientation. Therefore, they should not be construed as a limitation on the present disclosure.

Moreover, the terms "first" and "second" are merely for the purpose of describing, and should not be construed as indicating or implying the degrees of importance or implicitly indicating the quantity of the specified technical features. Accordingly, the features defined by "first" and "second" may explicitly or implicitly include at least one of the features. In the description of the present disclosure, the meaning of "plurality of" is "at least two", for example, two, three and so on, unless explicitly and particularly defined otherwise.

In the present disclosure, unless explicitly defined or limited otherwise, the terms "mount", "connect", "link" and "fix" should be interpreted broadly. For example, it may be fixed connection, detachable connection, or integral connection; it may be mechanical connection, electrical connection or mutual communication; and it may be direct connection or indirect connection by an intermediate medium, and may be internal communication between two elements or interaction between two elements, unless explicitly defined otherwise. For a person skilled in the art, the particular meanings of the above terms in the present disclosure may be comprehended according to particular situations.

In the present disclosure, unless explicitly defined or limited otherwise, that a first feature is "over" or "under" a second feature may include that the first feature and the second feature directly contact or that the first feature and the second feature indirectly contact via an intermediate medium. Furthermore, that a first feature is "above" a second feature may include that the first feature is directly over or obliquely over the second feature, or merely indicates that the vertical height of the first feature is greater than that of the second feature. That a first feature is "below" a second feature may include that the first feature is directly under or obliquely under the second feature, or merely indicates that the vertical height of the first feature is less than that of the second feature.

In the present disclosure, the terms "an embodiment", "some embodiments", "example", "particular example" or "some examples" and so on mean that particular features, structures, materials or characteristics described with reference to the embodiment or example are included in at least one of the embodiments or examples of the present disclosure. In the description, the illustrative expressions of the above terms do not necessarily relate to the same embodiment or example. Furthermore, the described particular features, structures, materials or characteristics may be combined in one or more embodiments or examples in a suitable form. Moreover, subject to avoiding contradiction, a person skilled in the art may combine different embodiments or examples described in the description and the features of the different embodiments or examples.

## Claims

1. An onboard refrigerator for a vehicle, comprising:
a cabinet (1);
a drawer (2), wherein the drawer (2) is slidably provided inside the cabinet (1); and
a sliding component (3), wherein the sliding component (3) comprises a first sliding member (31) and a second sliding member (32), **characterized in that** the first sliding member (31) is provided on the drawer (2), the second sliding member (32) is provided at an inner wall surface of the cabinet (1), the second sliding member (32) has a sliding surface that is sliding-fitted to the first sliding member (31), and the sliding surface of the second sliding member (32) and a plane orthogonal to a height direction of the cabinet (1) have an included angle therebetween in a first direction, wherein the first direction is orthogonal to the height direction and a front-rear direction of the cabinet (1);
wherein the sliding component (3) further comprises a fixing base (33), the fixing base (33) is provided inside the cabinet (1), the second sliding member (32) is provided on the fixing base (33), the fixing base (33) has an oblique surface, the oblique surface forms the included angle with the plane, the second sliding member (32) is provided on the oblique surface, and the sliding surface of the second sliding member (32) is parallel to the oblique surface.

2. The onboard refrigerator according to claim 1, **characterized in that** a quantity of first sliding members (31) is at least two, a quantity of second sliding members (32) is at least two, each of the first sliding members (31) corresponds to one instance of the second sliding members (32), the oblique surface is a plurality of oblique surfaces, and each of the second sliding members (32) corresponds to one instance of the plurality of oblique surfaces.

3. The onboard refrigerator according to claim 2, **characterized in that** the fixing base (33) comprises a first side surface (336) and a second side surface (337) that are provided opposite to each other in the first direction, the oblique surface comprises the first side surface (336) and the second side surface (337), the first side surface (336) extends in a direction from bottom to top and inclines toward the second side surface (337), the second side surface (337) extends in the direction from bottom to top and inclines toward the first side surface (336), one instance of the second sliding members (32) corresponds to the first side surface (336), and another instance of the second sliding members (32) corresponds to the second side surface (337).

4. The onboard refrigerator according to any one of claims 1 to 3, **characterized in that** the included angle is greater than or equal to 30 degrees and less than or equal to 60 degrees.

5. The onboard refrigerator according to any one of claims 1 to 4, **characterized in that** the second sliding member (32) is detachably connected to the oblique surface.

6. The onboard refrigerator according to any one of claims 1 to 5, **characterized in that** a first stopper (333) is provided at a front end of the fixing base (33), a first fitting part (21) is provided at a rear end of the drawer (2), and the first stopper (333) is capable of fitting to the first fitting part (21) to restrict a maximum opening degree of the drawer (2).

7. The onboard refrigerator according to claim 6, **characterized in that** a second stopper (334) is provided at the front end of the fixing base (33), the second stopper (334) comprises an elastic member (335) that is telescopic in the height direction of the cabinet (1), a second fitting part (22) is provided at a bottom of the drawer (2), the second fitting part (22) is located between a front end and the rear end of the drawer (2), and the second stopper (334) is capable of fitting to the second fitting part (22) to position the drawer (2).

8. The onboard refrigerator according to claim 7, **characterized in that** a quantity of the second stopper (334) is at least two, and the first stopper (333) is provided between neighboring instances of the second stoppers (334).

9. The onboard refrigerator according to claim 7, **characterized in that** the first stopper (333) and the second stopper (334) face each other and are separate in the first direction.

10. The onboard refrigerator according to any one of claims 1 to 9, **characterized in that** a rack (332) is provided on one of the drawer (2) and the fixing base (33), a damping gear (52) is provided on the other of the drawer (2) and the fixing base (33), and the damping gear (52) and the rack (332) are fitted.

11. The onboard refrigerator according to claim 10, **characterized in that** the onboard refrigerator further comprises an installation frame (51), the installation frame (51) is provided at a bottom wall of the drawer (2), the damping gear (52) is provided on the installation frame (51), and the rack (332) is provided on the fixing base (33) and extends in a length direction of the second sliding member (32).

12. The onboard refrigerator according to claim 1, **characterized in that** the first sliding member (31) and the drawer (2) are fixed to each other, the second sliding member (32) and the cabinet (1) are fixed to each other, and the first sliding member (31) is slidable in a length direction of the second sliding member (32).

13. The onboard refrigerator according to claim 1, **characterized in that** the inner wall surface of the cabinet (1) comprises a bottom wall, the fixing base (33) is provided on the bottom wall, and the second sliding member (32) is provided on the fixing base (33).

14. A vehicle, **characterized in that** the vehicle comprises:
a vehicle body; and
an onboard refrigerator, wherein the onboard refrigerator is provided inside the vehicle body, and the onboard refrigerator is the onboard refrigerator according to any one of claims 1-13.

## Patentansprüche

1. Bordkühlschrank für ein Fahrzeug, umfassend:
einen Schrank (1);
eine Schublade (2), wobei die Schublade (2) verschiebbar im Schrank (1) vorgesehen ist; und
eine Gleitkomponente (3), wobei die Gleitkomponente (3) ein erstes Gleitelement (31) und ein zweites Gleitelement (32) umfasst, **dadurch gekennzeichnet, dass** das
erste Gleitelement (31) an der Schublade (2) vorgesehen ist,
das zweite Gleitelement (32) an einer Innenwandfläche des Schranks (1) vorgesehen ist, das zweite Gleitelement (32) eine Gleitfläche aufweist, die in Gleiteingriff mit dem ersten Gleitelement (31) steht, und die Gleitfläche des zweiten Gleitelements (32) und eine Ebene, die orthogonal zur Höhenrichtung des Schranks (1) verläuft, in einer ersten Richtung einen Einschlusswinkel zwischen sich aufweisen, wobei die erste Richtung orthogonal zur Höhenrichtung und einer Vorder-Rück-Richtung des Schranks (1) verläuft;
wobei die Gleitkomponente (3) ferner eine Befestigungsbasis (33) umfasst, wobei die Befestigungsbasis (33) im Inneren des Schranks (1) vorgesehen ist, das zweite Gleitelement (32) auf der Befestigungsbasis (33) vorgesehen ist, die Befestigungsbasis (33) eine schräge Fläche aufweist, die schräge Fläche den Einschlusswinkel mit der Ebene bildet, das zweite Gleitelement (32) auf der schrägen Fläche vorgesehen ist und die Gleitfläche des zweiten Gleitelements (32) parallel zur schrägen Fläche verläuft.

2. Bordkühlschrank nach Anspruch 1, **dadurch gekennzeichnet, dass** eine Anzahl erster Gleitelemente (31) wenigstens zwei beträgt, eine Anzahl zweiter Gleitelemente (32) wenigstens zwei beträgt, jedes der ersten Gleitelemente (31) einem Exemplar der zweiten Gleitelemente (32) entspricht, die schräge Fläche aus einer Mehrzahl von schrägen Flächen besteht und jedes der zweiten Gleitelemente (32) einem Exemplar der Mehrzahl von schrägen Flächen entspricht.

3. Bordkühlschrank nach Anspruch 2, **dadurch gekennzeichnet, dass** die Befestigungsbasis (33) eine erste Seitenfläche (336) und eine zweite Seitenfläche (337) umfasst, die einander in der ersten Richtung gegenüberliegend angeordnet sind, wobei die schräge Fläche die erste Seitenfläche (336) und die zweite Seitenfläche (337) umfasst, die erste Seitenfläche (336) sich in einer Richtung von unten nach oben erstreckt und zur zweiten Seitenfläche (337) hin geneigt ist, die zweite Seitenfläche (337) sich in der Richtung von unten nach oben erstreckt und zur ersten Seitenfläche (336) hin geneigt ist, ein Exemplar der zweiten Gleitelemente (32) der ersten Seitenfläche (336) entspricht, und ein weiteres Exemplar der zweiten Gleitelemente (32) der zweiten Seitenfläche (337) entspricht.

4. Bordkühlschrank nach einem der Ansprüche 1 bis 3, **dadurch gekennzeichnet, dass** der Einschlusswinkel größer oder gleich 30 Grad und kleiner oder gleich 60 Grad ist.

5. Bordkühlschrank nach einem der Ansprüche 1 bis 4, **dadurch gekennzeichnet, dass** das zweite Gleitelement (32) lösbar mit der schrägen Fläche verbunden ist.

6. Bordkühlschrank nach einem der Ansprüche 1 bis 5, **dadurch gekennzeichnet, dass** an einem vorderen Ende der Befestigungsbasis (33) ein erster Anschlag (333) vorgesehen ist, an einem hinteren Ende der Schublade (2) ein erstes Passteil (21) vorgesehen ist, und der erste Anschlag (333) ausgebildet ist, mit dem ersten Passteil (21) zusammenzuwirken, um den maximalen Öffnungsgrad der Schublade (2) zu begrenzen.

7. Bordkühlschrank nach Anspruch 6, **dadurch gekennzeichnet, dass** am vorderen Ende der Befestigungsbasis (33) ein zweiter Anschlag (334) vorgesehen ist, wobei der zweite Anschlag (334) ein elastisches Element (335) umfasst, das in Höhenrichtung des Schranks (1) teleskopisch ist, und an einer Unterseite der Schublade (2) ein zweites Passteil (22) vorgesehen ist, das zweite Passteil (22) sich zwischen einem vorderen Ende und dem hinteren Ende der Schublade (2) befindet, und der zweite Anschlag (334) ausgebildet ist, mit dem zweiten Passteil (22) zusammenzuwirken, um die Schublade (2) zu positionieren.

8. Bordkühlschrank nach Anspruch 7, **dadurch gekennzeichnet, dass** eine Anzahl zweiter Anschläge (334) wenigstens zwei beträgt und der erste Anschlag (333) zwischen benachbarten Exemplaren der zweiten Anschläge (334) vorgesehen ist.

9. Bordkühlschrank nach Anspruch 7, **dadurch gekennzeichnet, dass** der erste Anschlag (333) und der zweite Anschlag (334) einander zugewandt und in der ersten Richtung voneinander beabstandet sind.

10. Bordkühlschrank nach einem der Ansprüche 1 bis 9, **dadurch gekennzeichnet, dass** eine Zahnstange (332) an einem von der Schublade (2) und der Befestigungsbasis (33) vorgesehen ist, ein Dämpfungsgetriebemittel (52) an dem anderen von der Schublade (2) und der Befestigungsbasis (33) vorgesehen ist und das Dämpfungsgetriebemittel (52) und die Zahnstange (332) miteinander in Eingriff stehen.

11. Bordkühlschrank nach Anspruch 10, **dadurch gekennzeichnet, dass** der Bordkühlschrank ferner einen Einbaurahmen (51) umfasst, wobei der Einbaurahmen (51) an einer Bodenwand der Schublade (2) vorgesehen ist, das Dämpfungsgetriebemittel (52) an dem Einbaurahmen (51) vorgesehen ist und die Zahnstange (332) an der Befestigungsbasis (33) vorgesehen ist und sich in einer Längsrichtung des zweiten Gleitelements (32) erstreckt.

12. Bordkühlschrank nach Anspruch 1, **dadurch gekennzeichnet, dass** das erste Gleitelement (31) und die Schublade (2) fest miteinander verbunden sind, das zweite Gleitelement (32) und der Schrank (1) fest miteinander verbunden sind und das erste Gleitelement (31) in einer Längsrichtung des zweiten Gleitelements (32) verschiebbar ist.

13. Bordkühlschrank nach Anspruch 1, **dadurch gekennzeichnet, dass** die Innenwandfläche des Schranks (1) eine Bodenwand umfasst, die Befestigungsbasis (33) an der Bodenwand vorgesehen ist und das zweite Gleitelement (32) an der Befestigungsbasis (33) vorgesehen ist.

14. Fahrzeug, **dadurch gekennzeichnet, dass** das Fahrzeug umfasst:
eine Fahrzeugkarosserie; und
einen Bordkühlschrank, wobei der Bordkühlschrank im Inneren der Fahrzeugkarosserie vorgesehen ist und es sich bei dem Bordkühlschrank um den Bordkühlschrank nach einem der Ansprüche 1 bis 13 handelt.

## Revendications

1. Réfrigérateur embarqué pour un véhicule, comprenant :
une armoire (1) ;
un tiroir (2), dans lequel le tiroir (2) est prévu de manière coulissante à l'intérieur de l'armoire (1) ; et
un composant coulissant (3), dans lequel le composant coulissant (3) comprend un premier élément coulissant (31) et un second élément coulissant (32), **caractérisé en ce que** le premier élément coulissant (31) est prévu sur le tiroir (2), le second élément coulissant (32) est prévu au niveau d'une surface de paroi intérieure de l'armoire (1), le second élément coulissant (32) présente une surface coulissante qui est adaptée par coulissement au premier élément coulissant (31), et la surface coulissante du second élément coulissant (32) et un plan orthogonal à une direction de hauteur de l'armoire (1) présentent un angle d'ouverture entre eux dans une première direction, dans lequel la première direction est orthogonale à la direction de hauteur et à une direction avant-arrière de l'armoire (1) ;
dans lequel le composant coulissant (3) comprend en outre une base de fixation (33), la base de fixation (33) est prévue à l'intérieur de l'armoire (1), le second élément coulissant (32) est prévu sur la base de fixation (33), la base de fixation (33) présente une surface oblique, la surface oblique forme l'angle d'ouverture avec le plan, le second élément coulissant (32) est prévu sur la surface oblique, et la surface de coulissement du second élément coulissant (32) est parallèle à la surface oblique.

2. Réfrigérateur embarqué selon la revendication 1, **caractérisé en ce qu'**une quantité de premiers éléments coulissants (31) est d'au moins deux, une quantité de seconds éléments coulissants (32) est d'au moins deux, chacun des premiers éléments coulissants (31) correspond à une instance des seconds éléments coulissants (32), la surface oblique est une pluralité de surfaces obliques, et chacun des seconds éléments coulissants (32) correspond à une instance de la pluralité de surfaces obliques.

3. Réfrigérateur embarqué selon la revendication 2, **caractérisé en ce que** la base de fixation (33) comprend une première surface latérale (336) et une seconde surface latérale (337) qui sont prévues à l'opposé l'une de l'autre dans la première direction, la surface oblique comprend la première surface latérale (336) et la seconde surface latérale (337), la première surface latérale (336) s'étend dans une direction de bas en haut et s'incline vers la seconde surface latérale (337), la seconde surface latérale (337) s'étend dans la direction de bas en haut et s'incline vers la première surface latérale (336), une instance des seconds éléments coulissants (32) correspond à la première surface latérale (336), et une autre instance des seconds éléments coulissants (32) correspond à la seconde surface latérale (337).

4. Réfrigérateur embarqué selon l'une quelconque des revendications 1 à 3, **caractérisé en ce que** l'angle d'ouverture est supérieur ou égal à 30 degrés et inférieur ou égal à 60 degrés.

5. Réfrigérateur embarqué selon l'une quelconque des revendications 1 à 4, **caractérisé en ce que** le second élément coulissant (32) est relié de manière amovible à la surface oblique.

6. Réfrigérateur embarqué selon l'une quelconque des revendications 1 à 5, **caractérisé en ce qu'**un premier bouchon (333) est prévu à une extrémité avant de la base de fixation (33), une première pièce de liaison (21) est prévue à une extrémité arrière du tiroir (2), et le premier bouchon (333) est capable de s'adapter à la première pièce de liaison (21) pour limiter un degré d'ouverture maximum du tiroir (2).

7. Réfrigérateur embarqué selon la revendication 6, **caractérisé en ce qu'**un second bouchon (334) est prévu à l'extrémité avant de la base de fixation (33), le second bouchon (334) comprend un élément élastique (335) qui est télescopique dans la direction de la hauteur de l'armoire (1), une seconde pièce de liaison (22) est prévue au niveau d'un fond du tiroir (2), la seconde pièce de liaison (22) est située entre une extrémité avant et l'extrémité arrière du tiroir (2), et le second bouchon (334) est capable de s'adapter à la seconde pièce de liaison (22) pour positionner le tiroir (2).

8. Réfrigérateur embarqué selon la revendication 7, **caractérisé en ce qu'**une quantité du second bouchon (334) est d'au moins deux, et le premier bouchon (333) est prévu entre des instances voisines des seconds bouchons (334).

9. Réfrigérateur embarqué selon la revendication 7, **caractérisé en ce que** le premier bouchon (333) et le second bouchon (334) se font face et sont séparés dans la première direction.

10. Réfrigérateur embarqué selon l'une quelconque des revendications 1 à 9, **caractérisé en ce qu'**une crémaillère (332) est prévue sur l'un du tiroir (2) et de la base de fixation (33), un engrenage d'amortissement (52) est prévu sur l'autre du tiroir (2) et de la base de fixation (33), et l'engrenage d'amortissement (52) et la crémaillère (332) sont adaptés.

11. Réfrigérateur embarqué selon la revendication 10, **caractérisé en ce que** le réfrigérateur embarqué comprend en outre un cadre d'installation (51), le cadre d'installation (51) est prévu au niveau d'une paroi de fond du tiroir (2), l'engrenage d'amortissement (52) est prévu sur le cadre d'installation (51), et la crémaillère (332) est prévue sur la base de fixation (33) et s'étend dans une direction de longueur du second élément coulissant (32).

12. Réfrigérateur embarqué selon la revendication 1, **caractérisé en ce que** le premier élément coulissant (31) et le tiroir (2) sont fixés l'un à l'autre, le second élément coulissant (32) et l'armoire (1) sont fixés l'un à l'autre, et le premier élément coulissant (31) peut coulisser dans une direction longitudinale du second élément coulissant (32).

13. Réfrigérateur embarqué selon la revendication 1, **caractérisé en ce que** la surface de paroi intérieure de l'armoire (1) comprend une paroi de fond, la base de fixation (33) est prévue sur la paroi de fond, et le second élément coulissant (32) est prévu sur la base de fixation (33).

14. Véhicule, **caractérisé en ce que** le véhicule comprend :
une carrosserie de véhicule ; et
un réfrigérateur embarqué, dans lequel le réfrigérateur embarqué est prévu à l'intérieur de la carrosserie du véhicule, et le réfrigérateur embarqué est le réfrigérateur embarqué selon l'une quelconque des revendications 1 à 13.
